# FASCICULE DE BREVET EUROPEEN

(11) **EP 1 196 970 B1**
(45) Date de publication et mention de la délivrance du brevet: **26.03.2003**
(21) Numéro de dépôt: 00958617.3
(22) Date de dépôt: 26.07.2000
(51) Int. Cl.: H01S 3/091

(54) **PROCEDE DE POMPAGE OPTIQUE D'UN MILIEU AMPLIFICATEUR DE LUMIERE ET MODULE DE POMPAGE OPTIQUE POUR LA MISE EN OEUVRE DE CE PROCEDE**
VERFAHREN ZUM OPTISCHEN PUMPEN EINES LICHTVERSTÄRKENDEN MEDIUMS UND MODUL ZUR DURCHFÜHRUNG DES VERFAHRENS
METHOD FOR OPTICAL PUMPING OF A LIGHT-AMPLIFYING MEDIUM AND OPTICAL PUMPING MODULE FOR IMPLEMENTING SAID METHOD

(30) Priorité: 27.07.1999 FR 9909720
(43) Date de publication de la demande: 17.04.2002
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: DUPUY, Philippe, F-92290 Chatenay-Malabry (FR)
(74) Mandataire: Brykman, Georges
(86) Numéro de dépôt international: FR0002142
(87) Numéro de publication internationale: WO01008275

(56) Documents cités:
- US-A- 5 619 522
- PATENT ABSTRACTS OF JAPAN vol. 1999, no. 04, 30 avril 1999 (1999-04-30) & JP 11 026847 A (TOSHIBA CORP), 29 janvier 1999 (1999-01-29)

## Description

### DOMAINE TECHNIQUE

La présente invention concerne un procédé de pompage optique d'un milieu amplificateur de lumière ainsi qu'un module de pompage optique pour la mise en oeuvre de ce procédé.

Un laser fondé sur l'invention trouve des applications industrielles notamment dans les domaines suivants : soudure, découpe, traitement superficiel de matériaux et marquage d'objets.

Il peut également trouver des applications dans le domaine médical.

### ÉTAT DE LA TECHNIQUE ANTÉRIEURE

On sait qu'un laser comprend essentiellement un milieu amplificateur et deux miroirs formant une cavité résonante, le milieu amplificateur étant placé entre ces deux miroirs.

L'énergie nécessaire au fonctionnement d'un laser peut être fournie au milieu amplificateur de manière électrique, chimique ou optique.

Dans la présente invention, on s'intéresse à la troisième manière c'est-à-dire à ce que l'on appelle le pompage optique du milieu amplificateur.

Afin de réduire les effets qui limitent les performances du laser, la répartition de la lumière de pompage dans le milieu amplificateur doit être la plus homogène possible.

Or, si rien n'est spécifiquement entrepris dans ce sens, la répartition de cette lumière de pompage est en général inhomogène et présente souvent un maximum du côté de la source de cette lumière.

Précisons dès maintenant que l'invention concerne un procédé destiné à rendre cette répartition homogène.

On sait que le milieu amplificateur d'un laser absorbe tout ou partie de la puissance de pompage et en réémet une certaine quantité sous forme d'émission stimulée, le reste de la puissance absorbée étant transformé en chaleur. Cette émission stimulée est appelée « effet laser ».

L'absorption de la puissance de pompage suit une loi exponentielle (loi de Beer-Lambert) qui se traduit par une puissance absorbée plus importante sur la partie (ou les parties) du milieu amplificateur proche(s) de la source de pompage. Ceci crée des inhomogénéités de pompage : la puissance absorbée n'est pas la même en tout point du milieu amplificateur.

Les variations de pompage en différents points de ce milieu créent à leur tour des variations locales de l'indice de réfraction qui induisent des déformations du front d'onde du faisceau laser émis.

La conséquence ultime de ces inhomogénéités de pompage est une limitation de la qualité de ce faisceau laser. En particulier, la déformation du front d'onde est susceptible de limiter la puissance extraite du laser et d'augmenter la divergence du faisceau laser.

Pour remédier à ces inconvénients, il est connu, dans le cas particulier d'un milieu amplificateur solide en forme de barreau, de pomper longitudinalement ce milieu. Pour ce faire, on focalise le flux lumineux issu d'une ou plusieurs sources de lumière, des diodes lasers par exemple, sur l'une des faces du barreau.

Cette technique permet d'obtenir une répartition homogène du pompage mais elle n'est pas adaptée aux lasers de très forte puissance moyenne à cause des problèmes de sollicitation thermique de l'extrémité du milieu amplificateur. En fait cette technique est surtout adaptée aux lasers monomodes transverses de puissance moyenne modérée.

Lorsque l'on souhaite réaliser un laser de forte puissance moyenne, on utilise de préférence une technique connue de pompage transverse. On dispose alors radialement autour du milieu amplificateur un nombre fini de diodes lasers.

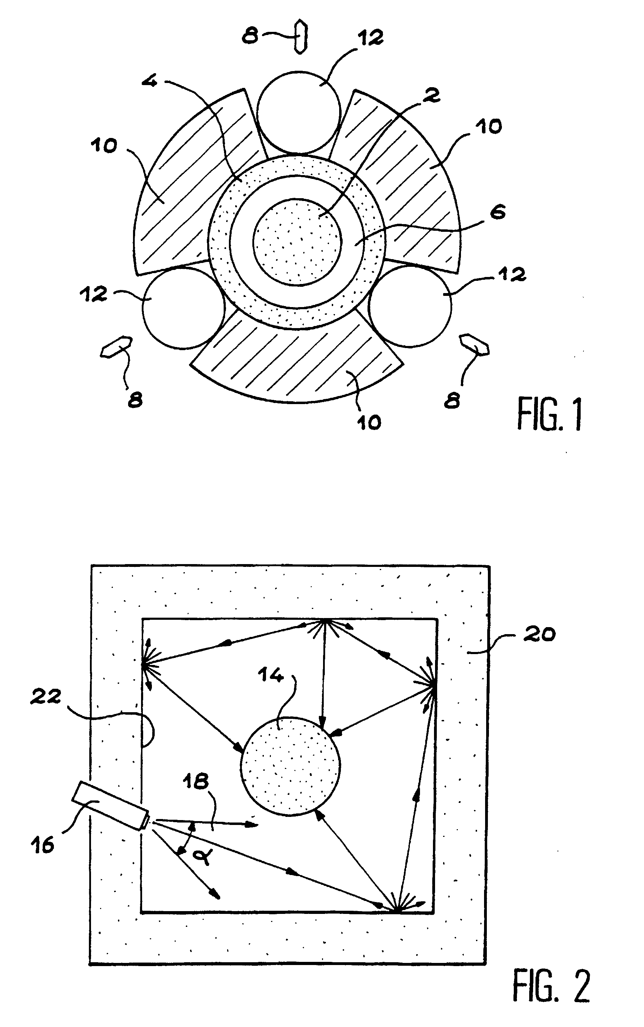

Ceci est schématiquement illustré par la figure 1 où l'on voit, en coupe transversale, un barreau laser 2 placé dans un manchon en saphir 4. L'espace compris entre le barreau 2 et le manchon 4 constitue un canal de refroidissement 6. Trois diodes lasers 8 sont placées à 120° les unes des autres autour du manchon 4 et sont séparées les unes des autres par des espaceurs en cuivre 10.

Chaque diode 8 émet un faisceau lumineux de pompage optique en direction du barreau 2 et l'on focalise ce faisceau sur le barreau par l'intermédiaire d'une lentille cylindrique 12.

Dans cette technique connue de pompage transversal, chaque diode n'éclaire en fait qu'une partie limitée du milieu amplificateur et l'homogénéité de pompage qu'il est alors possible d'obtenir dépend directement du degré de symétrie du système diodes-barreau.

Plus il y a de diodes, plus on s'approche du cas idéal de la symétrie de révolution. Or, en pratique, des contraintes mécaniques font que le nombre de diodes est souvent limité à 3 ou 5.

US-A-5 619 522 (voir Fig.1 de ce document) divulgue un procédé de pompage optique d'un milieu amplificateur selon le préambule de la revendication 1, ainsi qu'un module de pompage optique selon le préambule de la revendication 2.

### EXPOSÉ DE L'INVENTION

La présente invention a pour objet un procédé de pompage optique d'un milieu amplificateur de lumière ainsi qu'un module de pompage optique qui permettent une répartition homogène de ce pompage, sont utilisables pour former un laser, quelle que soit la puissance souhaitée pour ce laser, et ne nécessitent pas un grand nombre de sources de lumière de pompage.

De façon précise, la présente invention a pour objet un procédé de pompage optique d'un milieu amplificateur de lumière, dans lequel on utilise au moins une source de lumière de pompage optique du milieu amplificateur et l'on entoure ce milieu amplificateur par un réflecteur dont la paroi (simple ou multiple) est apte à réfléchir la lumière de la source, et dans lequel on envoie le faisceau directement issu de la source vers la paroi du réflecteur pour que ce faisceau y subisse des réflexions successives, et dans lequel on place le milieu amplificateur en dehors de ce faisceau directement issu de la source pour que ce milieu amplificateur soit pompé optiquement par la seule lumière, réfléchie par la paroi du réflecteur ce procédé étant caractérisé en ce que le réflecteur est partiellement ou totalement diffusant pour que le faisceau subisse sur la paroi du réflecteur des réflexions partiellement ou totalement diffuses successives.

L'invention concerne aussi un module de pompage optique pour un milieu amplificateur de lumière, comprenant au moins une source de lumière de pompage optique du milieu amplificateur et un réflecteur qui entoure ce milieu amplificateur et dont la paroi (simple ou multiple) est apte à réfléchir la lumière de la source, la source etant orientée de façon à envoyer le faisceau directement issu de cette source vers la paroi du réflecteur pour que ce faisceau y subisse des réflexions successives et le milieu amplificateur étant placé en dehors de ce faisceau directement issu de la source pour que ce milieu amplificateur soit pompé optiquement par la seule lumière réfléchie par la paroi du réflecteur ce module étant caractérisé en ce que le réflecteur est partiellement ou totalement diffusant pour que le faisceau subisse sur la paroi du réflecteur des réflexions partiellement ou totalement diffuses successives.

Selon un mode de réalisation préféré du module objet de l'invention, le milieu amplificateur forme un barreau cylindrique à base sensiblement circulaire, la source de lumière est destinée au pompage optique transversal de ce milieu et la paroi du réflecteur forme un cylindre dont les génératrices sont parallèles à l'axe du milieu amplificateur.

De préférence, le réflecteur a sensiblement la même longueur que le milieu amplificateur.

On peut par exemple choisir la base du cylindre formée par la paroi du réflecteur parmi les polygones sensiblement réguliers, les ellipses et les cercles.

La source de lumière peut être un émetteur de lumière.

Cet émetteur de lumière peut être choisi parmi une diode laser, une barrette de diodes lasers, une rangée de barrettes de diodes lasers, un empilement de barrettes de diodes lasers et une combinaison de cette rangée et de cet empilement, cette (ou ces) barrette(s) étant parallèle(s) aux génératrices du cylindre que forme la paroi du réflecteur.

Le module objet de l'invention peut comprendre en outre plusieurs blocs, chaque bloc comprenant une face plane, apte à réfléchir, de façon partiellement ou totalement diffuse, la lumière de la source, la base du cylindre formé par la paroi du réflecteur étant un polygone sensiblement régulier, cette paroi comprenant ainsi plusieurs côtés, chacun de ceux-ci étant formé par deux faces planes respectives de deux blocs adjacents.

La source de lumière peut être placée dans un intervalle formé entre deux blocs adjacents de manière que la lumière émerge de l'espace ainsi formé entre les faces planes respectives de ces deux blocs et atteigne la paroi du réflecteur.

Selon un mode de réalisation particulier de l'invention, les deux blocs sont électriquement conducteurs et la diode laser ou la (ou les) barrette(s) de diodes lasers est (ou sont) alimentée(s) électriquement par l'intermédiaire de ces deux blocs.

Au lieu d'être un émetteur de lumière, la source de lumière peut être un moyen de propagation de lumière dont une extrémité est destinée à recevoir la lumière d'un émetteur de lumière et dont une autre extrémité est destinée à envoyer cette lumière vers la paroi du réflecteur. De préférence, le réflecteur est quasi-lambertien.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement une technique connue de pompage optique transverse d'un milieu amplificateur de lumière et a déjà été décrite,
- la figure 2 illustre schématiquement le principe de la présente invention,
- la figure 3 est une vue en coupe transversale schématique d'un premier mode de réalisation particulier du module de pompage optique objet de l'invention, utilisant un réflecteur à paroi cylindrique à base carrée,
- la figure 4 est une vue en coupe transversale schématique d'un deuxième mode de réalisation particulier du module de pompage optique objet de l'invention, utilisant un réflecteur diffusant à paroi cylindrique à base circulaire, et
- la figure 5 est une vue en coupe transversale schématique d'un troisième mode de réalisation particulier du module de pompage optique objet de l'invention, utilisant un réflecteur diffusant à paroi cylindrique à base polygonale.

### EXPOSÉ DÉTAILLÉ DE MODES DE RÉALISATION PARTICULIERS

Un module de pompage optique conforme à l'invention est schématiquement représenté en coupe transversale sur la figure 2 et comprend un milieu amplificateur de lumière 14 et au moins une source de lumière 16, par exemple une diode laser, cette source étant de préférence quasi-ponctuelle.

La source 16 est prévue pour fournir une lumière apte à pomper optiquement le milieu amplificateur 14.

Le module représenté sur la figure 2 comprend aussi un réflecteur 20 qui entoure le milieu amplificateur et dont la paroi 22 est apte à réfléchir cette lumière de façon diffuse. Ce réflecteur est de préférence quasi-lambertien.

La source 16, qui débouche dans l'espace délimité par le réflecteur, est orientée de façon à envoyer, vers la paroi 22 de ce réflecteur, le faisceau lumineux 18 directement issu de cette source 16. Ce faisceau 18 y subit alors des réflexions diffuses successives.

De plus, le milieu amplificateur 14 est placé en dehors de ce faisceau directement issu-de la source 16. De ce fait, ce milieu amplificateur 14 n'est pompé optiquement que par la lumière diffusée par la paroi 22 du réflecteur 20.

Dans les modules de pompage optique transversal connus, des sources de lumière, par exemple des diodes lasers, émettent directement dans la direction du milieu amplificateur. L'homogénéité du pompage ne peut alors résulter que de la somme des contributions respectives des diodes lasers par effet de symétrie.

La présente invention va à l'encontre de ce principe : aucune source utilisée dans l'invention n'émet directement sa lumière en direction du milieu amplificateur. C'est pourquoi le procédé de pompage optique objet de l'invention peut être considéré comme un pompage indirect.

Dans l'invention, on distribue le flux lumineux émis par chaque source de lumière de pompage tout autour du milieu amplificateur grâce à un réflecteur partiellement ou totalement diffusant afin d'éviter de créer une direction privilégiée. Cette source constitue alors non pas une source localisée mais une source étendue qui éclaire le milieu amplificateur dans toutes les directions.

Il convient de noter que chaque source permet d'obtenir un pompage quasiment homogène. Dans l'invention il y a donc moins de contraintes de symétrie que dans l'art antérieur, tant pour le positionnement mécanique des sources que pour le tri sélectif de ces dernières.

Il convient également de noter que du fait qu'on utilise un réflecteur diffusant, du moment que le milieu amplificateur est entouré par ce réflecteur, la forme de ce dernier a peu d'importance : il peut être carré, polygonal, rond ou de toute autre forme.

Ce réflecteur peut par exemple être fait en céramique du type SINTOX-Al (marque déposée) ou en polymère du type SPECTRALON (marque déposée) ou être obtenu au moyen d'un traitement de surface d'une paroi métallique, par exemple un traitement de type INFRAGOLD (marque déposée) au cours duquel on sable la paroi métallique et on y dépose ensuite une mince couche d'or.

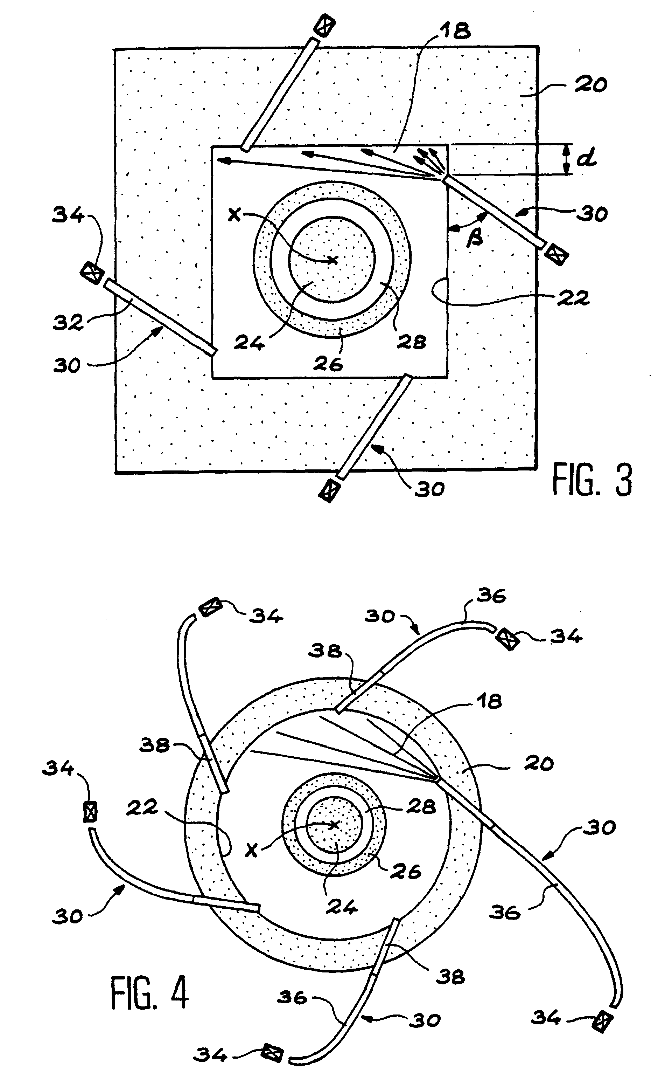

On considère maintenant les modules de pompage optique transversal qui sont schématiquement représentés sur les figures 3 à 5. Dans chacun de ces modules, un réflecteur diffusant 20 et un milieu amplificateur 24 en forme de barreau cylindrique à base sensiblement circulaire sont coaxiaux et ont à peu près la même longueur. Ces modules de pompage sont vus en coupe transversale perpendiculairement à l'axe X qui est commun au milieu amplificateur et au réflecteur.

Un module conforme à l'invention est utilisable non seulement dans un laser (au sens strict) mais encore dans un dispositif d'amplification de lumière où un faisceau laser traverse un milieu amplificateur de lumière destiné à amplifier ce faisceau.

Dans le cas d'une application des modules des figures 3 à 5 à un laser, on précise que les deux miroirs de la cavité du laser, qui délimitent cette cavité, seraient perpendiculaires à l'axe X et respectivement placés de part et d'autre du milieu amplificateur 24.

Dans les exemples des figures 3 à 5, ce milieu amplificateur 24 est solide. Il est placé à l'intérieur d'un tube 26 qui est transparent à la lumière de pompage. Dans l'intervalle 28 compris entre ce tube et le milieu amplificateur, on fait circuler, grâce à des moyens non représentés, un liquide de refroidissement transparent à la lumière de pompage pour refroidir le milieu amplificateur.

Le réflecteur 20 entoure le tube 26 et donc le milieu amplificateur 24 et la paroi 22 de ce réflecteur forme un cylindre dont les génératrices sont parallèles à l'axe X du milieu amplificateur.

Dans les exemples des figures 3 à 5, on utilise une ou plusieurs sources de lumière de pompage optique, par exemple une ou plusieurs diodes lasers ayant un spectre d'émission en accord avec le spectre d'absorption du milieu amplificateur.

En variante, on peut amener la lumière émise par les diodes lasers à l'intérieur de la chambre de pompage délimitée par le réflecteur diffusant par exemple au moyen de guides de lumière, de fibres optiques ou de simples fentes (rendues réflectrices vis-à-vis de la lumière de pompage).

La lumière ainsi injectée dans la chambre de pompage est dans un premier temps dirigée directement sur le matériau réflecteur diffusant sans passer par le milieu amplificateur.

Dans l'exemple de la figure 3, la paroi du réflecteur est un cylindre à base carrée : on voit sur la figure les quatre côtés de cette paroi.

On utilise quatre sources de lumière de pompage optique 30 respectivement associées aux quatre côtés. Chacune de ces sources 30 comprend un guide de lumière 32, par exemple une lame de verre, qui traverse le réflecteur parallèlement à l'axe X comme on le voit sur la figure 3.

Une première extrémité de cette lame 32 débouche à l'intérieur du réflecteur et affleure la paroi de celui-ci tandis que la deuxième extrémité de la lame débouche à l'extérieur de ce réflecteur.

Cette deuxième extrémité est optiquement couplée à une diode laser 34 ou à une barrette de diodes lasers parallèle à l'axe X qui est commandée par des moyens non représentés.

Cette diode ou cette barrette de diodes émet la lumière de pompage qui est alors transportée par la lame et sort par la première extrémité de cette lame pour illuminer la paroi du réflecteur.

On choisit l'inclinaison β de chaque lame par rapport à la paroi et la distance d de la première extrémité correspondante par rapport à un côté adjacent de cette paroi pour que le faisceau lumineux 18 issu de cette première extrémité illumine la paroi sans rencontrer le milieu amplificateur 24, l'angle d'ouverture α de ce faisceau (voir figure 2) étant connu.

A titre purement indicatif et nullement limitatif, on utilise
- un barreau amplificateur en Nd:YAG de 5 mm de diamètre et d'indice optique 1,82,
- des diodes lasers dont la divergence totale à mi-hauteur vaut 40°, qui sont positionnées à 0,5 mm de leurs guides de lumière respectifs, émettent à 808 nm et ont une largeur spectrale de 2 nm à mi-hauteur,
- un tube de verre 26 de diamètre intérieur 7 mm et de diamètre extérieur 9 mm et d'indice optique 1,5, ce tube étant traité anti-reflet à l'extérieur,
- de l'eau de refroidissement d'indice optique égal à 1,33,
- un réflecteur à paroi carrée de 15 mm de côté et ayant un coefficient de réflexion de 97,5% et
- des guides de lumière en verre dont les dimensions valent 1 cmxl mm, qui ont un indice optique égal à 1,5 et dont les première et deuxième extrémités sont traitées anti-reflet.

Dans l'exemple de la figure 4 le réflecteur 20 a une paroi cylindrique à base circulaire. On utilise cinq sources de lumière de pompage optique 30.

Chaque source comprend une fibre optique 36 dont une extrémité est optiquement couplée à une diode laser 34 commandée par des moyens non représentés et dont l'autre extrémité se trouve dans un embout rectiligne 38 qui traverse obliquement (c'est-à-dire non radialement) le réflecteur pour déboucher dans l'espace délimité par ce réflecteur en affleurant la paroi de ce réflecteur.

On voit le faisceau lumineux 18 directement issu de l'extrémité de l'embout dans l'espace délimité par la paroi 22. Ce faisceau éclaire encore cette paroi sans rencontrer le milieu amplificateur.

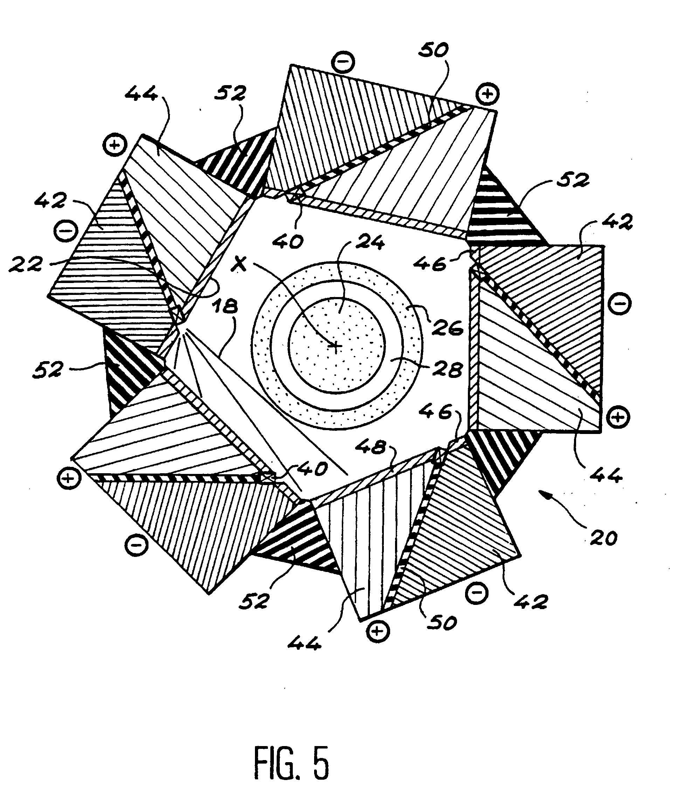

Dans l'exemple de la figure 5 le réflecteur diffusant 20 a une paroi cylindrique 22 à base polygonale par exemple à cinq côtés.

On utilise, en tant que sources de lumière de pompage, des émetteurs de lumière 40 constitués par des barrettes de diodes lasers qui sont parallèles à l'axe X du barreau amplificateur 24.

On peut aussi utiliser des superpositions et/ou des empilements de telles barrettes.

On voit sur la figure 5 cinq groupes de deux blocs métalliques 42 et 44 ayant respectivement deux faces planes 46 et 48 qui sont coplanaires et dont la réunion constitue l'un des côtés de la paroi 22 à base pentagonale du module de la figure 5.

Chaque barrette de diodes lasers est comprise entre les deux blocs métalliques 42 et 44 d'un même groupe et se trouve au voisinage des faces respectives 46 et 48 de ces deux blocs, sur la ligne séparant ces deux faces.

Ceci permet l'alimentation électrique des diodes lasers de cette barrette en polarisant les deux blocs de façon appropriée par des moyens symbolisés, sur la figure 5, par les signes - et + respectivement associés aux blocs 42 et 44.

On voit sur la figure 5 l'espace existant entre ces deux blocs, qui est partiellement occupé par la barrette 40 correspondante. Le reste de cet espace est rempli d'un matériau électriquement isolant 50.

On voit que cet espace est oblique par rapport aux faces planes respectives 46 et 48 des deux blocs 42 et 44 et que l'éclairage de la paroi du réflecteur est encore oblique dans le cas de la figure 5, le faisceau lumineux 18 directement issu de la barrette ne rencontrant pas le milieu amplificateur 24.

De même, un élément 52, fait d'un matériau électriquement isolant, sépare chaque bloc, appartenant à un groupe de blocs déterminé, d'un bloc du groupe adjacent pour éviter un contact électrique entre ces deux blocs.

De plus, toutes les faces 46 et 48 sont sablées puis revêtues d'une mince couche d'or pour obtenir la réflexion diffuse.

## Revendications

1. Procédé de pompage optique d'un milieu amplificateur de lumière (14, 24), dans lequel on utilise au moins une source (14, 30, 40) de lumière de pompage optique du milieu amplificateur et l'on entoure ce milieu amplificateur par un réflecteur (20) dont la paroi (22) est apte à réfléchir la lumière de la source, et dans lequel on envoie le faisceau (18) ) directement issu de la source vers la paroi du réflecteur pour que ce faisceau y subisse des réflexions successives, et dans lequel on place le milieu amplificateur en dehors de ce faisceau directement issu de la source pour que ce milieu amplificateur soit pompé optiquement par la seule lumière réfléchie par la paroi du réflecteur ce procédé étant **caractérisé en ce que** le réflecteur est partiellement ou totalement diffusant pour que le faisceau subisse sur la paroi du réflecteur des réflexions partiellement ou totalement diffuses successives.

2. Module de pompage optique comprenant un milieu amplificateur de lumière (14, 24), au moins une source (16, 30, 40) de lumière de pompage optique du milieu amplificateur et un réflecteur (20) qui entoure ce milieu amplificateur et dont la paroi (22) est apte à réfléchir la lumière de la source, la source étant orientée de façon à envoyer le faisceau (18) directement issu de cette source vers la paroi du réflecteur pour que ce faisceau y subisse des réflexions successives et le milieu amplificateur étant placé en dehors de ce faisceau directement issu de la source pour que ce milieu amplificateur soit pompé optiquement par la seule lumière réfléchie par la paroi du réflecteur ce module étant **caractérisé en ce que** le réflecteur est partiellement ou totalement diffusant pour que le faisceau subisse sur la paroi du réflecteur des réflexions partiellement ou totalement diffuses successives.

3. Module selon la revendication 2, dans lequel le milieu amplificateur (24) forme un barreau cylindrique à base sensiblement circulaire, la source de lumière (30, 40) est destinée au pompage optique transversal de ce milieu et la paroi (22) du réflecteur (20) forme un cylindre dont les génératrices sont parallèles à l'axe (X) du milieu amplificateur.

4. Module selon la revendication 3, dans lequel le réflecteur (20) a sensiblement la même longueur que le milieu amplificateur (24).

5. Module selon l'une quelconque des revendications 3 et 4, dans lequel la base du cylindre formé par la paroi (22) du réflecteur est choisie parmi les polygones sensiblement réguliers, les ellipses et les cercles.

6. Module selon l'une quelconque des revendication 3 à 5, dans lequel la source de lumière est un émetteur de lumière (16, 40) et cet émetteur de lumière est choisi parmi une diode laser, une barrette de diodes lasers, une rangée de barrettes de diodes laser, un empilement de barrettes de diodes lasers et une combinaison de cette rangée et de cet empilement, cette (ou ces) barrette(s) étant parallèle(s) aux génératrices du cylindre que forme la paroi du réflecteur.

7. Module selon l'une quelconque des revendications 3 à 6, comprenant en outre plusieurs blocs (42, 44), chaque bloc comprenant une face plane (46, 48),apte à réfléchir de façon partiellement ou totalement diffuse la lumière de la source, la base du cylindre formé par la paroi du réflecteur étant un polygone sensiblement régulier, cette paroi comprenant ainsi plusieurs côtés, chacun de ceux-ci étant formé par deux faces planes respectives de deux blocs adjacents.

8. Module selon la revendication 7, dans lequel la source de lumière (40) est placée dans un intervalle formé entre deux blocs adjacents (42, 44) de manière que la lumière émerge de l'espace ainsi formé entre les faces planes respectives de ces deux blocs et atteigne la paroi du réflecteur.

9. Module selon les revendications 6 et 8, dans lequel les deux blocs (42, 44) sont électriquement conducteurs et la diode laser ou la (ou les) barrette(s) de diodes lasers (40) est (ou sont) alimentée(s) électriquement par l'intermédiaire de ces deux blocs.

10. Module selon l'une quelconque des revendications 2 à 5, dans lequel la source de lumière est un émetteur de lumière (16, 40).

11. Module selon l'une quelconque des revendications 2 à 5, dans lequel la source de lumière est un moyen de propagation de lumière (32, 36) dont une extrémité est destinée à recevoir la lumière d'un émetteur de lumière (34) et dont une autre extrémité est destinée à envoyer cette lumière vers la paroi (22) du réflecteur (20).

12. Module selon l'une quelconque des revendications 2 à 11, dans lequel le réflecteur est quasi-lambertien.

## Claims

1. Method for optically pumping a light-amplifying medium (14, 24), wherein at least one light source 14, 30, 40) is used for optically pumping the amplifying medium and this amplifying medium is encircled by a reflector (20), the (simple or multiple) wall (22) of which is able to reflect the light of the source, and wherein the beam (18) directly stemming from the source is sent towards the wall of the reflector so that this beam undergoes successive reflections and wherein the amplifying medium is placed out of this beam directly stemming from the source so that the amplifying medium is optically pumped by the sole light reflected by the wall reflector this method being **characterized in that** the reflector is partly or totally diffusive so that the beam undergoes on the wall of the reflector successive, partly or totally diffusive reflections.

2. Optical pumping module for a light amplifying medium (14, 24) comprising at least a light source for optically pumping the amplifying medium and a reflector (20) which encircles this amplifying medium and the (single or multiple) wall (22) of which is able to reflect.the light of the source, which is orientated so as to send the beam (18) directly stemming from this source towards the wall of the reflector so that this beam undergoes successive reflections and the amplifying medium is placed out of this beam directly stemming from the source so that this amplifying medium is optically pumped by the sole light reflected by the wall of the reflector, said module being **characterized in that** the reflector is partly or totally diffuse, so that on the wall of the reflector the beam undergoes successive, partly or totally diffuse reflections.

3. Module according to claim 2, wherein the amplifying medium (24) forms a cylindrical rod with a substantially circular base, the light source (30, 40) being used for the transverse optical pumping of said medium and the wall (220 of the reflector (20) forms a cylinder, whose generatrixes are parallel to the axis (X) of the amplifying medium.

4. Module according to claim 3, wherein the reflector (20) has essentially the same length as the amplifying medium (24).

5. Module according to either of the claims 3 and 4, wherein the base of the cylinder formed by the reflector wall (22) is chosen from among substantially regular polygons, ellipses and circles.

6. Module according to any one of the claims 3 to 5, wherein the light source is a light emitter (16, 40) chosen from among a laser diode, an array of laser diodes, a row of laser diode arrays, a stack of laser diode arrays and a combination of said row and said stack, said array or arrays being parallel to the generatrixes of the cylinder formed by the reflector wall.

7. Module according to any one of the claims 3 to 6, comprising in addition several blocks (42, 44), each block comprising a planar face (46, 48) able to reflect in a partly or totally diffusive manner the light of the source, the base of the cylinder formed by the wall of the reflector is a substantially regular polygon, this wall thereby comprising several sides, each of the latter being formed by two respective planar faces of two adjacent blocks.

8. Module according to claim 7, wherein the light source (40) is placed in a gap formed between two adjacent blocks (42, 44) in such a way that the light emerges from the thereby formed space between the respective planar faces of these two blocks and reaches the wall of the reflector.

9. Module according to claims 6 and 8, wherein both blocks (42, 44) are electrically conducting and the laser diodes or the laser diode array(s) (40) are electrically powered via these two blocks.

10. Module according to any of claims 2 to 5, wherein the light source is a light emitter (16, 40).

11. Module according to any one of claims 2 to 5, wherein the light source is a light propagation means (32, 36), one end of which is for receiving the light from a light emitter (34) and another end of which is for sending this light towards the wall (22) of the reflector (20).

12. Module according to any of claims 2 to 11, wherein the reflector is quasi-lambertian.

## Patentansprüche

1. Verfahren zum optischen Pumpen eines lichtverstärkenden Mediums (14, 24), bei dem man wenigstens eine Lichtquelle (16, 30, 40) zum optischen Pumpen des Verstärkungsmediums benutzt und man dieses Verstärkungsmedium mit einem Reflektor (20) umgibt, dessen Wand (22) fähig ist, das Licht der Quelle zu reflektieren, und bei dem man den direkt aus der Quelle kommenden Strahl (18) so auf die Reflektorwand richtet, dass es dort zu mehreren sukzessiven Reflexionen kommt, und man das Verstärkungsmedium außerhalb des direkt aus der Quelle kommenden Strahls anordnet, damit dieses Verstärkungsmedium nur durch jenes Licht optisch gepumpt wird, das durch die Reflektorwand reflektiert wird,
**dadurch gekennzeichnet,**
**dass** der Reflektor streut, partiell oder total, so dass die sukzessiven Reflexionen des Strahls auf der Reflektorwand partiell oder total gestreute Reflexionen sind.

2. Modul zum optischen Pumpen eines lichtverstärkenden Mediums (14, 24), bei dem man wenigstens eine Lichtquelle (16, 30, 40) zum optischen Pumpen des Verstärkungsmediums benutzt und man dieses Verstärkungsmedium mit einem Reflektor (20) umgibt, dessen Wand (22) fähig ist, das Licht der Quelle zu reflektieren, wobei die Quelle so ausgerichtet ist, dass sie den direkt aus dieser Quelle kommenden Strahl (18) so auf die Reflektorwand richtet, dass es dort zu mehreren sukzessiven Reflexionen kommt, und man das Verstärkungsmedium außerhalb des direkt aus der Quelle kommenden Strahls anordnet, damit dieses Verstärkungsmedium nur durch jenes Licht optisch gepumpt wird, das durch die Reflektorwand reflektiert wird,
**dadurch gekennzeichnet,**
**dass** der Reflektor streut, partiell oder total, so dass die sukzessiven Reflexionen des Strahls auf der Reflektorwand partiell oder total gestreute Reflexionen sind.

3. Modul nach Anspruch 2, bei dem das Verstärkungsmedium (24) einen zylindrischen Stab mit im Wesentlichen kreisförmiger Basis bildet, die Lichtquelle (30, 40) zu einem transversalen optischen Pumpen dieses Mediums bestimmt ist, und die Wand (22) des Reflektors (20) einen Zylinder bildet, dessen Mantellinien parallel sind zu der Achse (X) des Verstärkungsmediums.

4. Modul nach Anspruch 3, bei dem der Reflektor (20) im Wesentlichen die gleiche Länge wie das Verstärkungsmedium (24) hat.

5. Modul nach einem der Ansprüche 3 und 4, bei dem die Basis des durch die Wand (22) des Reflektors gebildeten Zylinders ausgewählt wird unter den im Wesentlichen regelmäßigen Vielecken, den Ellipsen und den Kreisen.

6. Modul nach einem der Ansprüche 3 bis 5, bei dem die Lichtquelle ein Lichtemitter (16, 40) ist und dieser Lichtemitter ausgewählt wird unter einer Laserdiode, einer Laserdiodenanordnung, einer Reihe von Laserdiodenanordnungen, einem Stapel von Laserdiodenanordnungen, und einer Kombination aus dieser Reihe und diesem Stapel, wobei diese Anordnung(en) parallel ist (sind) zu den Mantellinien des Zylinders, den die Wand des Reflektors bildet.

7. Modul nach einem der Ansprüche 3 bis 6, der außerdem mehrere Blöcke (42, 44) umfasst, wobei jeder Block eine ebene Fläche (46, 48) umfasst, fähig das Licht der Quelle partiell oder total gestreut zu reflektieren, und die Basis des durch die Wand des Reflektors gebildeten Zylinders ein im Wesentlichen regelmäßiges Vieleck ist, wobei diese Wand also mehrere. Seiten umfasst, von denen jede durch zwei ebene Flächen von jeweils zwei benachbarten bzw. aneinandergrenzenden Blöcken gebildet wird.

8. Modul nach Anspruch 7, bei dem die Lichtquelle (40) sich in einem Zwischenraum befindet, ausgebildet zwischen zwei benachbarten bzw. aneinandergrenzenden Blöcken (42, 44), so dass das Licht aus dem derart zwischen den jeweils ebenen Flächen dieser beiden Blöcke ausgebildeten Raum herauskommt und die Wand des Reflektors erreicht.

9. Modul nach den Ansprüchen 6 und 8, bei dem die beiden Blöcke (42, 44) elektrisch leitfähig sind und die Laserdiode oder die Laserdiodenanordnung(en) (40) über diese beiden Blöcke elektrisch versorgt wird (werden).

10. Modul nach einem der Ansprüche 2 bis 5, bei dem die Lichtquelle ein Lichtemitter (16, 40) ist.

11. Modul nach einem der Ansprüche 2 bis 5, bei dem die Lichtquelle eine Lichtausbreitungsquelle (32, 36) ist, bei der ein Ende dazu bestimmt ist, das Licht eines Lichtemitters (34) zu empfangen, und das andere Ende dazu bestimmt ist, dieses Licht in Richtung der Wand (22) des Reflektors (20) abzustrahlen.

12. Modul nach einem der Ansprüche 2 bis 11, bei dem der Reflektor ein quasilambertscher Reflektor ist.
